# EUROPEAN PATENT APPLICATION

(11) **EP 3 483 231 A1**
(43) Date of publication of application: **15.05.2019**
(21) Application number: 17201548.9
(22) Date of filing: 14.11.2017
(51) Int. Cl.: C09J 11/06, C08K 5/00, C09J 201/00

(54) **COLOR CHANGING COMPOSITION**

(71) Applicant: 3M Innovative Properties Company, Saint Paul, MN 55133-3427 (US)
(72) Inventor: Rudnicki, Krzysztof Piotr, 51-416 Wroclaw (PL); Jürgens, Michael, 41453 Neuss (DE)
(74) Representative: Müller, Bruno

(57) **Abstract**

The present disclosure relates to a color-changing composition comprising:
a) a dye selected from the group consisting of metal complexes, wherein the metal complexes comprise:
i. a central ion of a metal selected from the group consisting of iron, vanadium, chromium, manganese, cobalt, nickel and copper; and
ii. chelate ligands having heteroaromatic structures;

b) an adhesive composition;
c) optionally, a curable polymer resin selected from the group consisting of epoxy resins, polyester resins, polyurethane resins, vinyl resins, and any combinations or mixtures thereof;
wherein the color-changing composition has an initial color and is capable of changing color to a final color upon contacting a curable composition comprising one or more curing agents and a curable polymer resin; wherein the one or more curing agents are suitable to cure the curable polymer resin; and wherein the initial color is different from the final color.

## Description

### Technical Field

The present disclosure relates to the field of color-changing compositions, in particular color-changing adhesive compositions which are useful in the preparation of composite materials. The present disclosure also relates to a process of preparing an assembly, and making use of the color-changing composition.

### Background

Color-changing compositions, in particular adhesive color-changing compositions have been used for years in the preparation of composite materials. In certain applications for adhesive compositions it is desirable to control the amount of adhesive used or to indicate the areas where the adhesive has been applied. This is the case for certain spray adhesives. Therefore, some spray adhesive compositions are colored as described, for example, in US patent application No. 2005/0082338 (He et al.) or in US Patent No. 5,480,925 (Masuzaki et al.). An example of an application where it may be desirable to indicate the areas where the adhesive composition has been applied to is the preparation of composite materials. Certain composite materials, for example those containing one or more curable resins and reinforcing materials like fibers, are widely used as a light weight alternative to metals, for example in the production of components for use in the automotive, aircraft, and watercraft industries, as well as in the architecture and construction businesses. A typical process for making composite materials involves the preparation of a layer containing the reinforcing materials, such as fibers. The reinforcing materials in those applications are held in place by means of adhesives. The adhesives are typically sprayed onto the substrate and are colored to indicate the areas onto which the adhesives have been applied and to avoid using excessive amounts of adhesives. A resin material is then typically combined with the reinforcing material and subjected to curing. This process may be repeated as needed, depending on the application. When using colored adhesives, colored residue of the adhesive may remain visible in the finished composite material. This residual color can be undesirable because it could negatively impact the visual appearance of the finished composite material.

A partial solution is described in WO 2016/081357 (Jung et al.), which discloses a color-changing adhesive composition, for example, a color-changing adhesive composition suitable for the preparation of composite materials.

Without contesting the technical advantages associated with the color-changing compositions known in the art, there is still a need for a more versatile color-changing composition suitable for the preparation of composite materials, and which provides fast color change.

Other advantages of the color-changing compositions and processes of the disclosure will be apparent from the following description.

### Summary

According to one aspect, the present disclosure relates to a color-changing composition comprising:
a) a dye selected from the group consisting of metal complexes, wherein the metal complexes comprise:
   i. a central ion of a metal selected from the group consisting of iron, vanadium, chromium, manganese, cobalt, nickel and copper; and
   ii. chelate ligands having heteroaromatic structures;
b) an adhesive composition;
c) optionally, a curable polymer resin selected from the group consisting of epoxy resins, polyester resins, polyurethane resins, vinyl resins, and any combinations or mixtures thereof;
wherein the color-changing composition has an initial color and is capable of changing color to a final color upon contacting a curable composition comprising one or more curing agents and a curable polymer resin; wherein the one or more curing agents are suitable to cure the curable polymer resin; and wherein the initial color is different from the final color.

In another aspect, the present disclosure is directed to a process of preparing an assembly, comprising the steps of:
a) applying a first component mixture comprising the adhesive composition and the dye, as described above, to a substrate thereby forming an adhesive article;
b) optionally, leveraging the initial color of the first component mixture to optimize the application of said first component mixture to said substrate;
c) contacting the adhesive article with a second component mixture comprising the curable composition comprising the curable polymer resin and the curing agent(s), as described above; and
d) optionally, monitoring the color change of the first component mixture from an initial color to a final color when said first component mixture contacts the second component mixture.

According to still another aspect, the present disclosure is directed to an assembly comprising a substrate and a color-changing composition as described above.

In yet another aspect, the present disclosure relates to the use of a dye selected from the group consisting of metal complexes, wherein the metal complexes comprise:
a) a central ion of a metal selected from the group consisting of [iron, vanadium, chromium, manganese, cobalt, nickel, copper]; and
b) chelate ligands having heteroaromatic structures;
as application indicator of an adhesive composition.

### Detailed description

According to one aspect, the present disclosure relates to a color-changing composition comprising:
a) a dye selected from the group consisting of metal complexes, wherein the metal complexes comprise:
   i. a central ion of a metal selected from the group consisting of iron, vanadium, chromium, manganese, cobalt, nickel and copper; and
   ii. chelate ligands having heteroaromatic structures;
b) an adhesive composition;
c) optionally, a curable polymer resin selected from the group consisting of epoxy resins, polyester resins, polyurethane resins, vinyl resins, and any combinations or mixtures thereof;
wherein the color-changing composition has an initial color and is capable of changing color to a final color upon contacting a curable composition comprising one or more curing agents and a curable polymer resin; wherein the one or more curing agents are suitable to cure the curable polymer resin; and wherein the initial color is different from the final color.

In the context of the present disclosure, it has been surprisingly found that a color-changing composition as described above provides fast color change to a final color upon contacting a versatile group of curable compositions comprising one or more curing agents and a curable polymer resin.

Without wishing to be bound by theory, it is believed that these beneficial properties are provided by the specific type of dyes being selected from the group consisting of metal complexes as described above. In that respect, both the central ion of a metal and the chelate ligands having heteroaromatic structures are believed to play a crucial role in achieving these beneficial properties.

Still without being bound by theory, it is believed that the fast and versatile color change results from either an oxidation of the metal complex, in particular of its metallic ion; or a recombination of the initial metal complex, in particular a modification or a substitution of the initial chelate ligands having heteroaromatic structures.

In some advantageous aspects, the color-changing composition as described above are capable of changing color from a highly intense initial color to a substantially colorless final state.

As such, the color-changing compositions of the present disclosure are particularly suitable for the preparation of composite materials, in particular composite assemblies comprising reinforcing materials, such as reinforcing fibers.

In the context of the present disclosure, the expression "curable polymer resin" as used herein is meant to refer to a polymeric resin that is in a pre-curing state and that is capable of being cured upon being contacted with one or more curing agents. Curing can occur, for example, by heat, radiation (such as electron beam or UV radiation), chemical additives, or combinations thereof.

In the context of the present disclosure, the term "curable composition" as used herein is meant to refer to a composition comprising one or more curing agents and the curable polymer resin, wherein the one or more curing agents are suitable to cure the curable polymer resin.

The expression "sprayable adhesive composition" as used herein refers to an adhesive composition that can be delivered in the form or a spray or aerosol. A sprayable adhesive composition may contain suitable propellants, but the presence of a propellant is not necessary for an adhesive composition to be considered a sprayable adhesive composition.

In the context of the present disclosure, the expression "a color-changing composition" as used herein is meant to refer to the ability of the dye that was originally part of the composition to change color upon contact with the curable composition comprising one or more curing agents and the curable polymer resin. The change is at least in the hue attribute of color (see below for a discussion of color attributes) and, when measured using the CIELAB color space according to ASTM E308 (for Delta E) the Delta E is greater than 2.

The color-changing composition of the present disclosure comprises as a first technical feature a dye selected from the group consisting of metal complexes, wherein the metal complexes comprise:
i. a central ion of a metal selected from the group consisting of iron, vanadium, chromium, manganese, cobalt, nickel and copper; and
ii. chelate ligands having heteroaromatic structures.

In the context of the present disclosure, the terms "dye", "colorant" or "pigment" may be used interchangeably. The dye may be present in dissolved or dispersed form, preferably in a dissolved form. Suitable dyes for use herein are reactive to (i.e., change color from an initial color to a final color upon contact with the curable composition comprising the curable polymer resin and one or more curing agents used to cure the curable polymer resin by undergoing a change in color, referred to herein as "color changing".

In a typical aspect, the dye may react with the one or more curing agents used, for example a curing agent or a curing catalyst or both, or to side products or intermediates generated in the curing reaction. In another typical aspect, the dye may react with the curable polymer resin.

According to the specific execution according to which the curable polymer resin is selected from the group consisting of polyester resins, it is believed that dye reacts predominantly with the one more curing agents by undergoing an oxidation reaction of the central ion of the metal.

According to the specific execution according to which the curable polymer resin is selected from the group consisting of epoxy resins, it is believed that dye reacts predominantly with the curable polymer resin.

In certain aspects, the dye changes color from an initial color to a colorless state. The color change may occur concurrently with the curing reaction. Preferably, the color change has happened when the curing reaction has been completed.

The suitable dyes are selected according to the curing reaction and curing systems they are intended to react to. Suitable dyes for use herein will be easily identified by those skilled in the art in the light of the present disclosure.

The color-change may, for example, be in response to radicals, for example, radicals generated by the curing agent or radicals generated during the curing reaction. In certain aspects, the color-change may also be take place in response to a temperature increase, for example if the curing reaction is exothermic and the energy released by the curing reaction leads to the color-changing response of the colorant. The color-change may, for example, also be a response to a combination of the above.

In certain aspects, the dyes are reactive to radical-generating curing agents, for example to curing reaction initiated and/or carried by radical generating compounds (hereinafter "radical curing agents"), such as but not limited to peroxides. The peroxides may be organic or inorganic. In another aspect, the dyes are reactive to amine-based curing agents. In yet another aspect the dyes are reactive to amido-based curing agents, for example a cyanamide. In other aspects, the dyes are reactive to anhydride-based curing agents. In yet other aspect, the dyes are reactive to mercapto-based curing agents.

In a typical aspect, the dye is used in amounts to color the color-changing composition but undergo a visible change in color upon reaction with the curable composition comprising the curable polymer resin and one or more curing agents used to cure the curable polymer resin.

According to an exemplary aspect, the dye may be used in amounts comprised between 0.05% and 30%, between 0.05% and 20%, or even between 0.1% and 10%, by weight based in the total weight of the color-changing composition.

In certain aspects, the color change is visible to the naked eye. Examples of color changes include, but are not limited to, changes from green to colorless, red to colorless, yellow to colorless, orange to colorless, or blue to colorless. In case the resin is colored or non-transparent, the color-change may be that the colored composition is no longer discernable to the naked eye over the color of the resin after curing is complete.

The color change disclosed herein is directed to a visible color change of the components. Color is made up of three separate attributes: hue, chroma, and lightness. Hue is the perceived object color, e.g., red, yellow, blue, green, etc. Chroma (or saturation) is the vividness of a color, e.g., dull (or grey) to vivid (or saturated). Lightness (or value) is the degree of lightness of a color, e.g., white to dark. A color change as referred to herein, is a change in color visible to the naked eye. More preferably, the change in color is related to a change in hue (red to green, blue to yellow, etc.). Although these color changes can be, and are preferably, observed visually with the naked eye, an instrument may be used to more accurately determine the change in color. The color change may be quantitated using CIELAB or CIELCH color spaces. In CIELAB color space L* defines the lightness, a* defines red/green, and b* defines blue/yellow. In some embodiments, the color change observed in L*a*b* color space means Delta E is greater than 1, 2, 3, 5, 6, 8, 10, 20, 30 or even 40, where Delta E* is equal to the square root of the sum of the change in L* squared plus the change in a* squared plus the change in b* squared. In CIELCH color space L* defines the lightness, C* defines chroma, and h is the hue angle. In certain embodiments, a color change in L*C*h color space means Delta H is greater than 1, 2, 3, 5, 6, 8, 10, 20, 30, 40, or even 50, where Delta H is equal to the square root of the difference of the change in E* squared minus the sum of the change in L* squared and the change in C squared.

In a preferred aspect of the present disclosure, the dyes for use herein are substantially inorganic dyes, i.e. comprising a central ion of a metal and organic chelate ligands having heteroaromatic structures.

According to an advantageous aspect, the metal of the central ion is selected from the group consisting of iron, chromium, manganese, cobalt, and nickel. In a preferred aspect, the metal of the central ion is selected to be iron.

In a beneficial aspect, the central ion is selected to be a cation. Preferably, the central ion is selected from the group consisting of Fe(II), Va(II), Cr(II), Mn(II), Co(II) and Ni(II). More preferably, the central ion is selected to be Fe(II).

In a preferred aspect, the heteroaromatic structures of the chelate ligands for use herein are derived from benzene, naphthalene, pyridine, pyrrole or furan structures.

Preferably, the heteroaromatic structures of the chelate ligands for use herein are derived from benzene or naphthalene structures.

More preferably, the heteroaromatic structures of the chelate ligands for use herein are derived from naphthalene structures. More preferably, the heteroaromatic structures for use herein are selected from the group of quinoids.

According to a preferred aspect, the heteroaromatic structures of the chelate ligands for use herein are selected from the group consisting of 1,10-phenanthroline; 5-nitro-1,10-phenanthroline; 2,2'-dipyridyl; porphyrins; pyrroles; pyridines; chlorin; phthalocyanine; and any derivatives or combinations thereof. More preferably, the heteroaromatic structures of the chelate ligands for use herein are selected from the group of 1,10-phenanthroline and 5-nitro-1,10-phenanthroline.

According to a preferred aspect, the dye is selected from the group consisting of ferroin, nitroferroin, heme, and any combinations or mixtures thereof. More preferably, the dye is selected from the group consisting of ferroin, nitroferroin, and any combinations or mixtures thereof.
In the context of the present disclosure, the term "ferroin" is meant to refer to the compound having the formula [Fe(*o*-phen)₃]SO₄, where o-phen refers to 1,10-phenanthroline. The term "nitroferroin is meant to refer to the compound having the formula [Fe(*n*-phen)₃]SO₄, where n-phen refers to 5-nitro-1,10-phenanthroline.

According to a very preferred aspect, the dye is selected from the group consisting of ferroin, nitroferroin, and any combinations or mixtures thereof.

The color-changing composition of the present disclosure comprises as a further technical feature, an adhesive composition.

Any adhesive compositions may be used in the context of the present disclosure. Suitable adhesive compositions for use herein are commonly known in the art and will be easily identified by those skilled in the art, in the light of the present description. In some aspects, the adhesive composition may contain one or more adhesives.

According to an exemplary aspect of the disclosure, the adhesive composition for use herein is selected from the group consisting of acrylate-based adhesives, rubber-based adhesives, epoxy-based adhesives, block copolymer-based adhesives, in particular styrene-butadiene copolymer-based adhesives, and any combinations or mixtures thereof.

In an advantageous aspect, the adhesive composition for use herein is selected from the group consisting of acrylate-based adhesives, block copolymer-based adhesives, and any combinations of mixtures thereof.

The adhesives may be block copolymers. Block copolymers are elastomeric materials in which chemically different blocks or sequences are covalently bonded to each other. Block copolymers include at least two different polymeric blocks that are referred to as the A block and B block. The A block and B block may have different chemical compositions and different glass transition temperatures. The block copolymer may comprise aliphatic vinyl group monomers having carboxyl groups such as (meth)acrylic acid, crotonic acid, maleic acid, maleic acid anhydride, fumaric acid, or (meth)acrylamide; aromatic vinyl group monomers such as, e.g. styrene, alpha-methyl styrene, or p-methyl styrene; conjugated diene group monomers such as but not limited to butadiene or isoprene; olefin group monomers such as e.g. ethylene or propylene or lactone group monomers. Examples include but are not limited to styrene-butadiene polymers, for example those commercially as SBR1009AF a styrene-butadiene copolymer cross-linked with divinyl benzene available from Ashland. Examples of acrylate-based adhesives include those as described in US patent No. 3578622 (Brown et al.), which is incorporated by reference herein for its disclosure of acrylate-based adhesives. Examples of epoxy-based adhesives include those described in US patent application N0. 2005/0082338 (He et al.), which is incorporated by reference herein for its disclosure of epoxy-based adhesives.

In a particular aspect of the present disclosure, the adhesive composition for use herein is a pressure-sensitive adhesive composition, which means it is instantaneously adhesive upon application. Usually, mild pressure is applied to adhere the substrate, for example finger-tip pressure. The adhesive may also be a hot-melt adhesive, which means the adhesive is activated by a heat treatment to become adhesive.

According to an advantageous aspect of the disclosure, the adhesive composition for use herein is a sprayable composition. Sprayable adhesives are typically contained in a container kept under pressure greater than ambient pressure. The container typically contains a release valve or actuator which allows the adhesive composition to be released, for example as spray or aerosols. Typically, the sprayable adhesive composition is released as spray through the release valve or actuator which may contain a nozzle to produce a spray or aerosol. Container vessels, such as e.g. cylinders, may have a hose attached between the valves and the actuator.

A suitable sprayable adhesive composition for use herein commercially available from the 3M Company as 3M's super 77, low VOC elastomer adhesive.

In a particular aspect of the disclosure, the sprayable adhesive composition for use herein comprises one or more propellants, which are preferably selected from the group consisting of liquefied hydrocarbons, compressed gases, and any combinations or mixtures thereof.

Propellants as referred to herein include liquefied hydrocarbons and compressed gasses. Liquefied hydrocarbons are hydrocarbons that are gaseous at ambient conditions (20°C, 1 bar) but are kept under pressure to be in liquid form at ambient temperature. Liquefied hydrocarbons may be unsaturated or saturated. They may be linear, branched or cyclic, and they are typically aliphatic. Examples of liquefied hydrocarbons include but are not limited to butane, propane, isopropane, isobutene and the like. The hydrocarbons are preferably not halogenated, they may be halogenated in some applications.

In an advantageous aspect, the sprayable adhesive composition may contain, in addition to the liquefied hydrocarbons or as alternative, compressed gases. Such gases are gaseous at ambient conditions but are kept under increased pressure (i.e. they are compressed). They may still be in a gaseous state but they may also be liquefied. The compressed gases may be organic (for example hydrocarbons or halogenated hydrocarbons) or may be inorganic. Exemplary inorganic compressed gases include, but are not limited to, carbon dioxide, nitrogen, nitrous dioxide, compressed air or combinations thereof.

According to a typical aspect of the disclosure, the sprayable adhesive composition for use herein comprises from about 10 to about 75% by weight of propellants based on the weight of the sprayable adhesive composition. This may be a combined weight of propellants and solvents. In some aspects of the present disclosure, the propellant may also act as a solvent for one or more components of the adhesive composition.

The color-changing composition of the present disclosure may be solid. But in a preferred aspect, the color-changing composition comprise one or more organic solvents. Organic solvents for use herein include polar and non-polar solvents. Organic solvents include, for example, liquid hydrocarbons, liquid hydrocarbons that further contain units selected from ketone units, ether units, carboxylate ester units and combinations thereof. The hydrocarbons are typically saturated. The solvents typically have a melting point below 20°C and a boiling point greater than 30°C and preferably less than 200°C or less than 100°C or even less than 70°C. Examples of solvents for use herein include but are not limited to methyl ether ketone, acetone, xylene, hexane, diethyl ether, butyl ethyl ether.

In a particular aspect of the disclosure, the solvent-based color-changing composition may contain solvents at a significant amount. According to an exemplary aspect, the solvent-based color-changing composition comprises at least about 10% by weight of an organic solvent, based on the total weight of the color-changing composition. In another exemplary aspect, the color-changing composition comprises from 12 to 40% by weight or from 20 to 50% by weight of solvents, based on the total weight of the color-changing composition. In another particular aspect, the color-changing composition is an aqueous composition.

As will be easily apparent to those skilled in the art, the color-changing composition of the present disclosure may comprise additional ingredients to further improve or optimize the properties of the color-changing composition including but not limited to shelf-life, visual appearance, open pot time and handling of the color-changing composition. The color-changing composition may for example comprise tackifiers to improve adhesiveness. Any tackifiers commonly known in the art may be used. Examples of suitable tackifiers include but are not limited to rosin resins, e.g. rosin esters and their derivatives, polyterpenes and aromatic-modified polyterpene resins, coumarone-indene resins, alpha pinene-based resin, beta pinene-based resin, limonene-based resin. Partially or completely hydrogenated tackifiers may also be used.

Other optional additives include for example surfactants, stabilizers, corrosion inhibitors, or combinations thereof. In some exemplary aspects, the stabilizers for use herein are anti-oxidants. Examples of anti-oxidants include phenols, phosphites, thioesters, amines, polymeric hindered phenols, copolymers of 4-ethyl phenols, phenolic-based anti-oxidants or combinations thereof. Corrosion inhibitors are chemical compounds that can intervene in the chemical reactions of the composition with its metal surroundings, e.g. a storage drum or a containment vessel. Corrosion inhibitors include for example sulfonates, morpholine, benzotriazole, various amines, sodium benzoate, sodium nitrate, formamide or combination thereof or others well known in the art.

The color-changing composition of the present disclosure comprises as an optional technical feature, a curable polymer resin selected from the group consisting of epoxy resins, polyester resins, polyurethane resins, vinyl resins, and any combinations or mixtures thereof.

According to a preferred aspect of the color-changing composition of the present disclosure, the curable polymer resin for use herein is selected from the group consisting of epoxy resins, polyester resins, and any combinations or mixtures thereof.

In certain aspects of the disclosure, it is referred to systems comprising a polyester curable resin or comprising an epoxy curable resin. Also, some other aspects may refer to components (e.g., dyes or curing agents) that are used preferentially with, for example, a curable polyester resin system, while other components may be referred herein as being used preferentially with, for example, a curable epoxy resin system. However, in the absence of any specific reference to a particular curable polymer resin system, all other aspects disclosed throughout the entire application are intended to apply to a system comprising any curable polymer resin, be it a polyester resin, epoxy resin, polyurethane resin, vinyl resin, and combinations or mixtures thereof.

According to one preferred aspect of the present disclosure, the curable polymer resin for use herein is selected from curable polyester resins. Polyester resins are unsaturated resins formed by the reaction of dibasic organic acids and polyhydric alcohols. Unsaturated polyesters are condensation polymers formed by the reaction of polyols (also known as polyhydric alcohols), organic compounds with multiple alcohol or hydroxy functional groups, with saturated or unsaturated dibasic acids. Typical polyols used are glycols such as ethylene glycol; acids used are phthalic acid and maleic acid. The use of unsaturated polyesters and additives such as styrene lowers the viscosity of the resin. The initially liquid resin is converted to a solid by cross-linking chains. This is done by creating free radicals at unsaturated bonds, which propagate in a chain reaction to other unsaturated bonds in adjacent molecules, linking them in the process.

Examples of commercially available polyester resin for use in the present disclosure include that available under the trade designation PLUS 720 from Novol Sp. Z.o.o., Poland.

According to another preferred aspect of the present disclosure, the curable polymer resin for use herein is selected from curable epoxy resins. Useful curable epoxy resins include those derived from epoxy-functionalized monomers such as monomers containing one or more multifunctional glycidyl ethers. Typical monomers in curable epoxy resins include: glycidyl ethers of dihydric arenes, aliphatic diols or cycloaliphatic diols. Glycidyl ethers of aliphatic diols include linear or branched polymeric epoxides having one or more terminal epoxy groups such as, e.g., diglycidyl ethers of polyoxyalkylene glycols.

Examples of aromatic glycidyl ethers include, but are not limited to, those that can be prepared by reacting a dihydric arene with an excess of epichlorohydrin. Dihydric arenes, as referred to herein, are arenes having two hydrogen atoms available for a reaction with epichlorhydrin. Examples of useful dihydric arenes include resorcinol, catechol, hydroquinone, and polynuclear phenols including p,p'-dihydroxybenzophenone, 2,2'- dihydroxyphenyl sulfone, 2,2-dihydroxy-1,1-dinaphthylmethane, and the 2,2', 2,3', 2,4', 3,3', 3,4', and 4,4' isomers of dihydroxydiphenylmethane, dihydroxydiphenyldimethylmethane, dihydroxydiphenylethylmethylmethane, dihydroxydiphenylmethylpropylmethane, dihydroxydiphenylethylphenylmethane, dihydroxydiphenylpropylenphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane.

Examples of epoxy resins include those having one or more repeating units derivable from bisphenol A, bisphenol F or both. Other examples of epoxy resins include those that can be prepared by bisphenol A, bisphenol F or both with epichlorohydrin. The epoxy resins may have a molecular weight in the range of from about 170 to about 10,000, preferably from about 200 to about 3,000 g/mol. The average epoxy functionality in the resin is typically greater than 1 and less than 4. Novolak-type resins may also be employed.

Examples of commercially available aromatic and aliphatic epoxides useful in the disclosure include diglycidylether of bisphenol A (e.g. available under the trade designation "EPON 828", "EPON 431", "EPON 1310" and "EPON 1510" from Momentive Specialty ChemicalsGmbH, Duisburg, Germany, and "DER-331", "DER-332", and "DER-334" available from Dow Chemical Co,); diglycidyl ether of bisphenol F (e.g. EPICLON 830) available from Dainippon Ink and Chemicals, Inc.); and flame retardant epoxy resins (e.g. "DER 580", a brominated bisphenol type epoxy resin available from Dow Chemical Co.).

The color-changing composition of the present disclosure comprises as a further optional technical feature, one or more curing agents. Suitable curing agents for use herein will be appropriately selected according to the curing reaction and curing systems they are intended to be involved in. Suitable curing agents may also be possibly selected in view of the dye present in the color-changing composition.

According to a typical aspect of the color-changing composition of the present disclosure, the one or more curing agents for use herein are selected from the group consisting of amine-based curing agents, amido-based curing agents, in particular cyanamide-based curing agents, mercapto-based curing agents, anhydride-based curing agents, radical generating curing agents, and any combinations or mixtures thereof.

In a beneficial aspect, the one or more curing agents are selected from the group consisting of radical generating curing agents. The initial free radicals are induced by adding a compound that easily decomposes into free radicals. Preferably, the radical generating curing agent for use herein is selected from the group consisting of peroxide-based curing agents, azo initiators, photoinitiators, and any mixtures thereof. More preferably, the radical generating curing agent for use herein is selected from the group consisting of peroxide-based curing agents, in particular organic peroxide-based curing agents.

According to a particularly advantageous aspect of the color-changing composition, the suitable peroxide-based curing agent for use herein is selected from the group consisting of benzoyl peroxide, methyl ethyl ketone peroxide, dibenzoyl peroxide, and any combinations or mixtures thereof. More preferably, the peroxide-based curing agent is selected to be dibenzoyl peroxide or a suitable derivative thereof.

In the particular aspect of the disclosure according to which the curable polymer resin is selected from the group consisting of polyester resins, the one or more curing agents for use herein are preferably selected from the group consisting of radical generating curing agents, in particular peroxide-based curing agents, as described above.

In another particular aspect of the disclosure according to which the curable polymer resin is selected from the group consisting of epoxy resins, the one or more curing agents for use herein are selected from the group consisting of amine-based curing agents, amido-based curing agents, in particular cyanamide-based curing agents, mercapto-based curing agents, anhydride-based curing agents, and any combinations or mixtures thereof. In some particular aspects, the curing agents are chosen from trioxatridecane diamine, dicyandiamide curing agent, and anhydride curing agent METH/E.

Suitable curing agents suitable for curing, for example, epoxy resins include primary or secondary linear or branched long-chain amines (amine-based curing agents). Examples of suitable curing agent include amine-based curing agents and including those according to the general formula:

R¹R²N-R³-NR⁴H (I)

wherein R¹, R² and R⁴ represent, independently from each other, hydrogen, a linear or branched alkyl or a linear or branched polyoxyalkyl moiety. The residues R¹, R², R⁴ may contain a hydrocarbon containing about 1 to 25 carbon atoms or a poly ether containing from 3 to 25 carbon atoms. Preferably, one, more preferably two and most preferably all residues R¹, R² and R⁴ are hydrogen. R³ represents a linear or branched alkyl, alkylamine, polyaminoalkyl, polyamidoalkyl, alkylether or polyoxyalkyl residue having at least 5 carbon atoms. Preferably, R³ is a polyether and the curing agent is a polyetheramine or polyetherdiamine including those polyetheramines that can be derived from polypropyleneoxide or polyethylenoxide. R³ may also be a polyamidoamine or a polyamidodiamine including those that can be derived by reacting a dimer or trimer carboxylic acid with a polyetheramine. Examples of polyetheramines that can be used include but are not limited to those corresponding to the general formula:

H₂N-C₃H₆-O-[C₂H₄-O-]ₙC₃H₆-NH₂, (II)

H₂N-C₃H₆-O-[C₃H₆-O-]ₙC₃H₆-NH₂ (III),

H₂N-C(CH₃)H-CH₂-[O-CH₂-C(CH₃)H]ₙ-O-CH₂-CH(CH₃)-NH₂ (IV)

with n being within the range of 1 and 34, such as for example 1, 2, 3, 4, 5, or between 1 and 2 (such as for example 1.5 or 1.7), between 2 and 3 (such as for example 2.5 or 2.7), between 3 and 4 (e.g. 3.5 or 3.7), between 4 and 5 (e.g. 4.5 or 4.7), or n being 31, 32, 33 or between 31 and 33.

Suitable amines are available under the trade designation "PC AMINE DA" from Nitroil, Germany or under the trade designation "JEFFAMINE" from Huntsman, Belgium. A particular preferred curing agent is 4,7,10-trioxatridecane-1,13-diamine (TTD). TTD is commercially available, for example, from BASF or Nitroil. Combinations of curing agents, for example, a combination of two or more polyetherdiamines are also suitable.

Other curing agents for curing epoxy resins include anhydrides, amides, such as cyanamides, and mercapto-based curing agents.

Examples of typical mercapto-based curing agents include, but are not limited to, the following commercially-known compounds: Capcure 3-800, Capcure 3830-81, Capcure LOF, Capcure WR6, Capcure WR35, Capcure 40 SEC HV (Cognis), GPM 800, GPM 800 LO, GPM 830 CB, GPM 845 MT, GPM 888, GPM 890 CB, GPM 891, GPM 895 FC (Gabriel Performance Products), Karenz MT [pentaerythritol tetrakis(3-mercaptobutylate); CAS 31775-89-0] (Showa Denko), dipentenedimercaptan (CAS 4802-20-4), Mercaptized Soy Oil, PM 407, PM 358, Mercaptized Castor Oil: 805-C (Chevron Phillips), Thiocure® GDMA (glycol dimercaptoacetate; CAS 123-81-9), Thiocure® TMPMA (trimethylpropane trimercaptoacetate; CAS 10193-96-1), Thiocure® PETMA (pentaerythritol tetramercaptoacetate; CAS 10193-994), Thiocure® TMPMP (trimethylopropane tris-3-mercaptopropionate; CAS 33007-83-9), Thiocure ® PETMP (pentaerythritol tetra-3-mercaptopropionate; CAS 7575-23-7), Thiocure® ETTMP (ethoxylated trimethylpropane tris-3-mercaptopropionate (polymer), CAS 345352-19-4) (Bruno Bock).

According to one particular execution, the color-changing composition of the present disclosure is a three-component composition comprising:
a) component A comprising the adhesive composition and the dye;
b) component B comprising the curable polymer resin; and
c) component C comprising the curing agent(s).

According to another particular execution, the color-changing composition of the present disclosure is a two-component composition comprising:
a) component A comprising the adhesive composition and the dye; and
b) component D comprising the curable composition comprising the curable polymer resin and the curing agent(s).

According to another aspect, the present disclosure is directed to an assembly comprising a substrate and a color-changing composition as described above.

In an exemplary aspect, the color-changing composition of the present disclosure may be used to temporarily hold in place materials that may later be subject to a more permanent or stronger bond by the use of a cured or partially-cured resin. For example, in the manufacture of certain composites in the wind-blade or marine industries, glass fibers or other reinforcing materials are held in place by a sprayable adhesive before the fibers or reinforcing materials are infused with a curable resin. The two most commonly used polymeric curable resins in the manufacture of wind-blade products are epoxy resins and polyester resins.

In a preferred aspect, the assembly according to the present disclosure is selected from the group consisting of rotor blades for wind turbines, watercrafts, aircrafts, motor vehicles, and pieces of furniture.

All particular and preferred aspects relating to in particular, the dye, the adhesive composition, the curable polymer resin, the curable composition and the curing agents as described above in the context of the color-changing composition, are fully applicable to the description of the assembly, as described above.

In still another aspect, the present disclosure is directed to a process of preparing an assembly, comprising the steps of:
a) applying a first component mixture comprising the adhesive composition and the dye, as described above, to a substrate thereby forming an adhesive article;
b) optionally, leveraging the initial color of the first component mixture to optimize the application of said first component mixture to said substrate;
c) contacting the adhesive article with a second component mixture comprising the curable composition comprising the curable polymer resin and the curing agent(s), as described above; and
d) optionally, monitoring the color change of the first component mixture from an initial color to a final color when said first component mixture contacts the second component mixture.

According to a typical aspect of the method of the present disclosure, the assembly for use herein is selected from the group of composite articles, composite materials, and any combinations or mixtures thereof.

In an advantageous aspect of the method of the present disclosure, the substrate is selected from the group of reinforcing materials. More advantageously, the reinforcing material for use herein is selected from the group consisting of glass fibers, ceramic fibers, carbon fibers, and combinations or mixtures thereof.

Typically, composites are made by infusing a mixture (second component mixture) of a curable polymer resin and one or more curing agents on a substrate (such as, for example, reinforcing fibers). The curing time for this process is chosen to be sufficiently long so that the mixture can still be handled and infused while the curing reaction is taking place.

According to a particular aspect, the reinforcing fibers have been temporarily held in place by a suitable adhesive composition, such as e.g. a sprayable adhesive. Reinforcing fibers may be organic or inorganic. Typically, reinforcing fibers include inorganic fibers, including, but not limited to, glass fibers, ceramic fibers, carbon fibers and combinations thereof. Reinforcing fibers may also include organic fibers such as polyamide fibers including aromatic polyamide fibers like but not limited to (para) aramide fibers (also known as Kevlar fibers).

Embedding the fibers into the polymer resin matrix to create composite articles may be carried out by contacting a mixture of the curable polymer resins and the curing agents with the reinforcing material and allowing the material to cure.

One commonly used process for making composite materials is the so-called infusion process. The resin infusion process comprises the positioning of reinforcing fibers into a mold cavity. The fibers or an arrangement of fibers may be held in position by the use of the adhesive compositions. The mixture of curable polymer resins and the curing agents are allowed to flow into the mold. The resins preferably have a viscosity that allows them to flow into the mold and to embed the reinforcing materials. Typically, vacuum lines are positioned around the mold and are connected to a vacuum pot, which provides the negative pressure that draws the curable resin out of the resin containers into the reinforcement material. When the resin feeds and vacuum lines are installed a bag is placed over the mold. The bag seals the perimeter of the mold and the resin feed and vacuum tubes. A vacuum is then created which sucks the air out of the mold. From the containers, the mixture of the curable polymer resin and the curing agents is then pulled by the feed lines into the mold to contact or flow around the reinforcement material. The material is then allowed to cure to create a layer of composite material. Curing may be accelerated by heating the fibers impregnated with the resin and curing agents. For the curing, the vacuum may be released. The process may be repeated to create multiple layers. During curing, the color-changing composition according to the present disclosure changes color from an initial to a final color. In certain aspects, the final color is colorless and the colorant (or adhesive composition) is no longer visible in the cured resin or composite material.

Complete filling of resin in the fiber glass commonly known as "wetting of the fibers" in the industry-is a desired outcome when infusing the resin so as to have a final composite with suitable properties. If there are void spots or improper wetting of the fibers then the composite would be expected to have subpar properties. The present disclosure, by providing a change in the color associated with the fibers upon contact of the resin, provides a method to monitor that the part is completely filled with resin (fully wetted) at an early stage so that the necessary corrective action can be taken.

In other aspects, a similar infusion process may be used except that instead of vacuum driving the mixture of curable resin and curing composition onto the fibers, positive pressure is being used to pump the mixture.

According to a particular aspect, the adhesive composition for use in the process of the present disclosure is a spray adhesive and contains one or more propellants selected from liquefied hydrocarbons and compressed gases. Thus, in certain aspects, the step of applying the adhesive composition to the substrate is carried out by spraying the adhesive composition onto the substrate.

All particular and preferred aspects relating to in particular, the dye, the adhesive composition, the curable polymer resin, the curable composition, the curing agents and the substrate as described above in the context of the color-changing composition and the assembly, are fully applicable to the description of the method, as described above.

The assemblies obtained by the process according to the present disclosure may be used as components of aircrafts, motor vehicles, such as cars and trucks or watercrafts, as well as components of rotor blades in wind turbines and pieces of furniture.

In yet another aspect, the present disclosure relates to the use of a dye selected from the group consisting of metal complexes, wherein the metal complexes comprise:
a) a central ion of a metal selected from the group consisting of [iron, vanadium, chromium, manganese, cobalt, nickel, copper]; and
b) chelate ligands having heteroaromatic structures;
as application indicator of an adhesive composition.

According to an advantageous aspect of the present disclosure, the dye as disclosed above is used as application indicator of an adhesive composition in the manufacturing of composite materials and composite articles.

Accordingly, and in a still another aspect, the present disclosure relates to the use of a dye selected from the group consisting of metal complexes, wherein the metal complexes comprise:
a) a central ion of a metal selected from the group consisting of [iron, vanadium, chromium, manganese, cobalt, nickel, copper]; and
b) chelate ligands having heteroaromatic structures;
in the manufacturing of composite materials and composite articles.

In a particular aspect, the dye as disclosed above is used in combination with an adhesive composition. Advantageously, the dye as disclosed above is used in further combination with a curable polymer resin, and optionally with one or more curing agents.

All particular and preferred aspects relating to in particular, the dye, the adhesive composition, the curable polymer resin, the curable composition, the curing agents and the substrate as described above in the context of the color-changing composition, the assembly and the method, are fully applicable to the description of the uses of the present disclosure, as described above.

Item 1 is a color-changing composition comprising:
a) a dye selected from the group consisting of metal complexes, wherein the metal complexes comprise:
   i. a central ion of a metal selected from the group consisting of iron, vanadium, chromium, manganese, cobalt, nickel and copper; and
   ii. chelate ligands having heteroaromatic structures;
b) an adhesive composition;
c) optionally, a curable polymer resin selected from the group consisting of epoxy resins, polyester resins, polyurethane resins, vinyl resins, and any combinations or mixtures thereof;
wherein the color-changing composition has an initial color and is capable of changing color to a final color upon contacting a curable composition comprising one or more curing agents and a curable polymer resin; wherein the one or more curing agents are suitable to cure the curable polymer resin; and wherein the initial color is different from the final color.

Item 2 is a composition according to item 1, which further comprises one or more curing agents.

Item 3 is a composition according to any of item 1 or 2, wherein the one or more curing agents are selected from the group consisting of amine-based curing agents, amido-based curing agents, in particular cyanamide-based curing agents, mercapto-based curing agents, anhydride-based curing agents, radical generating curing agents, and any combinations or mixtures thereof.

Item 4 is a composition according to any of the preceding items, wherein the one or more curing agents are selected from the group consisting of radical generating curing agents.

Item 5 is a composition according to any of item 3 or 4, wherein the radical generating curing agent is selected from the group consisting of peroxide-based curing agents, azoinitiators, photoinitiators, and any mixtures thereof.

Item 6 is a composition according to any of items 3 to 5, wherein the radical generating curing agent is selected from the group consisting of peroxide-based curing agents, in particular organic peroxide-based curing agents.

Item 7 is a composition according to any of item 5 or 6, wherein the peroxide-based curing agent is selected from the group consisting of benzoyl peroxide, methyl ethyl ketone peroxide, dibenzoyl peroxide, and any combinations or mixtures thereof.

Item 8 is a composition according to item 7, wherein the peroxide-based curing agent is selected to be dibenzoyl peroxide.

Item 9 is a composition according to any of the preceding items, wherein the metal of the central ion is selected from the group consisting of iron, chromium, manganese, cobalt and nickel.

Item 10 is a composition according to any of the preceding items, wherein the metal of the central ion is selected to be iron.

Item 11 is a composition according to any of the preceding items, wherein the central ion is selected to be a cation.

Item 12 is a composition according to any of the preceding items, wherein the central ion is selected from the group consisting of Fe(II), Va(II), Cr(II), Mn(II), Co(II) and Ni(II).

Item 13 is a composition according to any of the preceding items, wherein the central ion is selected to be Fe(II).

Item 14 is a composition according to any of the preceding items, wherein the heteroaromatic structures are derived from benzene, naphthalene, pyridine, pyrrole or furan structures.

Item 15 is a composition according to any of the preceding items, wherein the heteroaromatic structures of the chelate ligands are derived from benzene or naphthalene structures.

Item 16 is a composition according to any of the preceding items, wherein the heteroaromatic structures of the chelate ligands are derived from naphthalene structures.

Item 17 is a composition according to any of the preceding items, wherein the heteroaromatic structures of the chelate ligands are selected from the group of quinoids.

Item 18 is a composition according to any of the preceding items, wherein the heteroaromatic structures of the chelate ligands are selected from the group consisting of 1,10-phenanthroline; 5-nitro-1,10-phenanthroline; 2,2'-dipyridyl; porphyrins; pyrroles; pyridines; chlorin; phthalocyanine; and any derivatives or combinations thereof.

Item 19 is a composition according to any of the preceding items, wherein the heteroaromatic structures of the chelate ligands are selected from the group of 1,10-phenanthroline and 5-nitro-1,10-phenanthroline.

Item 20 is a composition according to any of the preceding items, wherein the dye is selected from the group consisting of ferroin, nitroferroin, heme, and any combinations or mixtures thereof.

Item 21 is a composition according to any of the preceding items, wherein the dye is selected from the group consisting of ferroin, nitroferroin, and any combinations or mixtures thereof.

Item 22 is a composition according to any of the preceding items, wherein the adhesive composition is selected from the group consisting of acrylate-based adhesives, rubber-based adhesives, epoxy-based adhesives, block copolymer-based adhesives, in particular styrene-butadiene copolymer-based adhesives, and any combinations or mixtures thereof.

Item 23 is a composition according to any of the preceding items, wherein the adhesive composition is selected from the group consisting of acrylate-based adhesives, block copolymer-based adhesives, and any combinations of mixtures thereof.

Item 24 is a composition according to any of the preceding items, wherein the adhesive composition is a pressure-sensitive adhesive composition.

Item 25 is a composition according to any of the preceding items, wherein the adhesive composition is a sprayable composition.

Item 26 is a composition according to any of the preceding items, wherein the adhesive composition comprises one or more propellants, which are preferably selected from the group consisting of liquefied hydrocarbons, compressed gases, and any combinations or mixtures thereof.

Item 27 is a composition according to any of the preceding items, wherein the curable polymer resin is selected from the group consisting of epoxy resins, polyester resins, and any combinations or mixtures thereof.

Item 28 is a composition according to any of the preceding items, wherein the curable polymer resin is selected from the group consisting of epoxy resins and the one or more curing agents are selected from the group consisting of amine-based curing agents, amido-based curing agents, in particular cyanamide-based curing agents, mercapto-based curing agents, anhydride-based curing agents, and any combinations or mixtures thereof.

Item 29 is a composition according to items 1 to 27, wherein the curable polymer resin is selected from the group consisting of polyester resins and the one or more curing agents are selected from the group consisting of radical generating curing agents, in particular peroxide-based curing agents.

Item 30 is a composition according to any of the preceding items, which further comprises an organic solvent, which is preferably selected from the group of polar and non-polar solvents.

Item 31 is a composition according to any of the preceding items, which is a three-component composition comprising:
a) component A comprising the adhesive composition and the dye;
b) component B comprising the curable polymer resin; and
c) component C comprising the curing agent(s).

Item 32 is a composition according to any of items 1 to 30, which is a two-component composition comprising:
a) component A comprising the adhesive composition and the dye; and
b) component D comprising the curable composition comprising the curable polymer resin and the curing agent(s).

Item 33 is an assembly comprising a substrate and a color-changing composition according to any of the preceding items.

Item 34 is an assembly according to item 33 which is selected from the group consisting of rotor blades for wind turbines, watercrafts, aircrafts, motor vehicles, and pieces of furniture.

Item 35 is a process of preparing an assembly, comprising the steps of:
a) applying a first component mixture comprising the adhesive composition and the dye, as described in any of items 1 to 32, to a substrate thereby forming an adhesive article;
b) optionally, leveraging the initial color of the first component mixture to optimize the application of said first component mixture to said substrate;
c) contacting the adhesive article with a second component mixture comprising the curable composition comprising the curable polymer resin and the curing agent(s), as described in any of items 1 to 32; and
d) optionally, monitoring the color change of the first component mixture from an initial color to a final color when said first component mixture contacts the second component mixture.

Item 36 is a process according to item 35, wherein the assembly is selected from the group of composite articles, composite materials, and any combinations or mixtures thereof.

Item 37 is a process according to any of item 35 or 36, wherein the substrate is selected from the group of reinforcing materials.

Item 38 is a process according to item 37, wherein the reinforcing material is selected from the group consisting of glass fibers, ceramic fibers, carbon fibers, and combinations or mixtures thereof.

Item 39 is the use of a dye selected from the group consisting of metal complexes, wherein the metal complexes comprise:
a) a central ion of a metal selected from the group consisting of iron, vanadium, chromium, manganese, cobalt, nickel and copper; and
b) chelate ligands having heteroaromatic structures;
as application indicator of an adhesive composition.

Item 40 is the use of a dye selected from the group consisting of metal complexes, wherein the metal complexes comprise:
a) a central ion of a metal selected from the group consisting of iron, vanadium, chromium, manganese, cobalt, nickel and copper; and
b) chelate ligands having heteroaromatic structures;
in the manufacturing of composite materials and composite articles.

Item 41 is the use of a dye selected from the group consisting of metal complexes according to any of item 39 or 40, in combination with an adhesive composition.

Item 42 is the use of a dye selected from the group consisting of metal complexes according to item 41, in combination with a curable polymer resin, and optionally with one or more curing agents.

### EXAMPLES

The present disclosure is further illustrated by the following examples. These examples are merely for illustrative purposes only and are not meant to be limiting on the scope of the appended claims.

### Materials employed:

In the examples, the following raw materials are used:
**Ferroin** is a complex of Fe(II) and 1,10-phenantroline commercially available from Sigma-Aldrich.
**Nitroferroin** is a complex of Fe(II) and 5-Nitro-1,10-phenantroline commercially available from TOKU-E, Belgium.
**Adhesive composition** is a sprayable acrylic adhesive commercially available from 3M Company, USA, under tradename "Low VOC Super 77 from 3M Company Super 77™". **Polyester resin** commercially available from Novol, Poland, under tradename "PLUS 720".
**Epoxy resin** commercially available from Momentive Specialty Chemicals GmbH, Duisburg, Germany, under tradename "EPIKOTE 828".
**Polyester curing agent** is dibenzoyl peroxide commercially available from Sigma-Aldrich under tradename "LUPEROX A98".
**Epoxy curing agent** is trioxatridecane diamine commercially available from Sigma-Aldrich.

### Examples:

### Example 1

A solution of Nitroferroin in the adhesive composition is added to a 2K polyester system comprising the polyester resin and dibenzoyl peroxide. The resin solution which has initially a deep red color is subjected to curing at room temperature. Upon contact with the curing agent, the color of the resin solution changes from deep red to transparent within 30 minutes.

### Example 2

A solution of Nitroferroin in the adhesive composition is added to a 2K epoxy system comprising the epoxy resin and trioxatridecane diamine. The resin solution which has initially a deep red color is subjected to curing at room temperature. Upon contact with the curing agent, the color of the resin solution changes from deep red to transparent within 30 minutes.

## Claims

1. A color-changing composition comprising:
a) a dye selected from the group consisting of metal complexes, wherein the metal complexes comprise:
i. a central ion of a metal selected from the group consisting of iron, vanadium, chromium, manganese, cobalt, nickel and copper; and
ii. chelate ligands having heteroaromatic structures;
b) an adhesive composition;
c) optionally, a curable polymer resin selected from the group consisting of epoxy resins, polyester resins, polyurethane resins, vinyl resins, and any combinations or mixtures thereof;
wherein the color-changing composition has an initial color and is capable of changing color to a final color upon contacting a curable composition comprising one or more curing agents and a curable polymer resin; wherein the one or more curing agents are suitable to cure the curable polymer resin; and wherein the initial color is different from the final color.

2. A composition according to claim 1, wherein the one or more curing agents are selected from the group consisting of amine-based curing agents, amido-based curing agents, in particular cyanamide-based curing agents, mercapto-based curing agents, anhydride-based curing agents, radical generating curing agents, and any combinations or mixtures thereof.

3. A composition according to any of the preceding claims, wherein the metal of the central ion is selected to be iron.

4. A composition according to any of the preceding claims, wherein the heteroaromatic structures of the chelate ligands are derived from benzene, naphthalene, pyridine, pyrrole or furan structures.

5. A composition according to any of the preceding claims, wherein the heteroaromatic structures of the chelate ligands are selected from the group consisting of 1,10-phenanthroline; 5-nitro-1,10-phenanthroline; 2,2'-dipyridyl; porphyrins; pyrroles; pyridines; chlorin; phthalocyanine; and any derivatives or combinations thereof

6. A composition according to any of the preceding claims, wherein the heteroaromatic structures of the chelate ligands are selected from the group of 1,10-phenanthroline and 5-nitro-1,10-phenanthroline.

7. A composition according to any of the preceding claims, wherein the dye is selected from the group consisting of ferroin, nitroferroin, heme, and any combinations or mixtures thereof.

8. A composition according to any of the preceding claims, wherein the curable polymer resin is selected from the group consisting of epoxy resins, polyester resins, and any combinations or mixtures thereof.

9. A composition according to any of the preceding claims, wherein the curable polymer resin is selected from the group consisting of epoxy resins and the one or more curing agents are selected from the group consisting of amine-based curing agents, amido-based curing agents, in particular cyanamide-based curing agents, mercapto-based curing agents, anhydride-based curing agents, and any combinations or mixtures thereof.

10. A composition according to claims 1 to 8, wherein the curable polymer resin is selected from the group consisting of polyester resins and the one or more curing agents are selected from the group consisting of radical generating curing agents, in particular peroxide-based curing agents.

11. A composition according to any of the preceding claims, which is a three-component composition comprising:
a) component A comprising the adhesive composition and the dye;
b) component B comprising the curable polymer resin; and
c) component C comprising the curing agent(s).

12. An assembly comprising a substrate and a color-changing composition according to any of the preceding claims.

13. A process of preparing an assembly, comprising the steps of:
a) applying a first component mixture comprising the adhesive composition and the dye, as described in any of claims 1 to 11, to a substrate thereby forming an adhesive article;
b) optionally, leveraging the initial color of the first component mixture to optimize the application of said first component mixture to said substrate;
c) contacting the adhesive article with a second component mixture comprising the curable composition comprising the curable polymer resin and the curing agent(s), as described in any of claims 1 to 11; and
d) optionally, monitoring the color change of the first component mixture from an initial color to a final color when said first component mixture contacts the second component mixture.

14. A process according to claim 13, wherein the assembly is selected from the group of composite articles, composite materials, and any combinations or mixtures thereof.

15. Use of a dye selected from the group consisting of metal complexes, wherein the metal complexes comprise:
a) a central ion of a metal selected from the group consisting of iron, vanadium, chromium, manganese, cobalt, nickel and copper; and
b) chelate ligands having heteroaromatic structures;
as application indicator of an adhesive composition.
